# EUROPEAN PATENT APPLICATION

(11) **EP 2 891 592 A1**
(43) Date of publication of application: **08.07.2015**
(21) Application number: 13833702.7
(22) Date of filing: 21.08.2013
(51) Int. Cl.: B62D 65/00, B65H 37/04

(54) **PROTECTIVE ADHESIVE SHEET STICKING DEVICE**

(30) Priority: 29.08.2012 JP 2012188885; 07.08.2013 JP 2013164088
(71) Applicant: Nitto Denko Corporation, Osaka 567-8680 (JP)
(72) Inventor: DEGAWA Osamu, Ibaraki-shi Osaka 567-8680 (JP); NAKAGAWA Yoshio, Ibaraki-shi Osaka 567-8680 (JP); IMOTO Eiichi, Ibaraki-shi Osaka 567-8680 (JP); KAI Makoto, Ibaraki-shi Osaka 567-8680 (JP)
(74) Representative: Grünecker Patent- und Rechtsanwälte PartG mbB
(86) International application number: PCT/JP2013/072333
(87) International publication number: WO 2014/034502

(57) **Abstract**

Prior to joining of a protective adhesive sheet to a workpiece such as an automobile, a pressurizing mechanism is operated to control pressure in accordance with positional information of an evaluation sample detected by a rotary encoder and deviation. The deviation is determined through comparison between actual pressure and reference pressure stored in the storing unit and determined for every position of the evaluation sample, the actual pressure being applied to the adhesive sheet by a squeegee at a tip end of an arm swung downward with an air cylinder. In addition, the adhesive sheet is joined to the evaluation sample while a servomotor for moving a holding table is operated to control a moving speed of the holding table in accordance with deviation. The deviation is determined through comparison between an actual moving speed and a reference moving speed stored in the storing unit, the actual moving speed being determined from the positional information. Then, the adhesive tape is repeatedly joined to the evaluation sample under the above conditions. An optimal joining condition is selected from the conditions, and the adhesive tape is joined to the workpiece under the optimal joining condition.

## Description

### Technical Field

The present invention relates to a protective adhesive-sheet joining apparatus that allows accurate joining of a protective adhesive sheet to a workpiece containing a body and a glass of a vehicle such as an automobile or a two-wheeled vehicle, a boat and an aircraft. The adhesive sheet serves to prevent damages to the workpiece. The adhesive sheet also serves to prevent degradation of body coating. Moreover, the adhesive sheet joined to a window glass serves to reduce incidence of ultraviolet rays or infrared rays into the vehicle and a fuselage of the aircraft, thereby suppressing increase in interior temperature.

### Background Art

In recent years, a transparent adhesive sheet is joined to paintwork on a body of a vehicle such as an automobile or an aircraft for prevention of damages. In addition, a colored protective adhesive sheet is joined instead of body coating. See, for example, Japanese Patent Publication No. 2012-46723A.

Moreover, a protective film is well known. See, for example, Japanese Patent Publication No. 2005-343113A. The protective film has an infrared-ray reflection function to shield infrared rays (especially near-infrared rays) incident indoors through a translucent board, such as a glass or a transparent resin plate, equipped with an automobile, a railway, and a house.

For instance, when a coating film protective sheet is joined to a shell of an automobile such as an engine hood, a jig is arranged on a recess of the paintwork on the shell and a protective sheet is covered on the recess. Thereafter, the jig is drawn out. Then, an operator presses the protective sheet using a squeegee to join the protective sheet to the shell. See, for example, Japanese Patent Publication No. 2005-193077A.

[Patent Literature 1] Japanese Patent Publication No. 2012-46723A
[Patent Literature 2] Japanese Patent Publication No. 2005-343113A
[Patent Literature 3] Japanese Patent Publication No. 2005-193077A

### Summary of Invention

### Technical Problem

The protective sheet joining apparatus currently used possesses the following problem. Specifically, a body or a window of a vehicle has a joining surface with curvature or irregularity. Consequently, an adhesive sheet cannot be joined to the body or the window accurately.

That is, the shell such as an engine hood is large, and thus an operator has difficulty in manually approaching the center of the shell upon joining. Accordingly, the squeegee is intermittently shifted. Moreover, pressure on the adhesive tape is non-uniform. Moreover, the squeegee contacts partially. The operator intends to join the adhesive sheet to the workpiece so carefully as to catch no air bubble on an interface between the workpiece and an adhesive. However, a linear imprint may be generated in a position where the squeegee stops. Alternatively, dotted irregularity or orange peels may occur.

The present invention has been made regarding the state of the art noted above, and its primary object is to provide a protective adhesive-sheet joining apparatus that allows accurate joining of a protective adhesive sheet to various types of workpiece, such as a body or a glass of a vehicle.

### Solution to Problem

Repeated experiments have been carried out by Inventors carefully in order to discover the origin of the above problem, whereby the following finding was obtained.

Specifically, a transparent model having the same shape as a workpiece or a plate having the same material as the workpiece was placed on a transparent holding table, and an adhesive sheet was superimposed on the workpiece. Thereafter, a squeegee was pressed against the adhesive tape while the holding table was moved, thereby joining the adhesive sheet to the workpiece. Such an experiment was carried out. The experiment was carried out under various setting conditions. The experiment included a joining step. In the joining step, a camera imaged a joining condition of the adhesive sheet from below the holding table. During and after the joining step of the adhesive sheet, a front face of the adhesive tape was confirmed to find that the adhesive sheet is adhered tightly to the workpiece with no air bubble. The front face was also confirmed to be flat.

However, the adhesive tape contained dotted irregularity on the front face thereof after a given period of time elapsed from completion of the joining step of the adhesive sheet. In addition, the adhesive sheet contained orange peels on the front face thereof after a given period of time elapsed from joining the adhesive sheet by applying a working liquid to the workpiece.

The image taken by the camera was confirmed to find that the squeegee partially contacted the irregularity. Such partial contact causes excessive pressure to the adhesive to change compositions of the adhesive. Such finding was obtained. Moreover, it was also confirmed that the orange peels occurred due to the partial contact of the squeegee when the working liquid was used.

The present invention is constituted as stated below to achieve the above object.

One embodiment of the present invention discloses a protective adhesive-sheet joining apparatus for joining a protective adhesive sheet to a workpiece. The protective adhesive-sheet joining apparatus includes a holding table supporting the workpiece placed thereon; a lifting mechanism having a holder for detaching a squeegee and allowing adjustment of a level of the squeegee, the squeegee pressing and joining the adhesive sheet to the workpiece; an angle adjustment mechanism adjusting an angle of the squeegee; a pressurizing mechanism controlling pressure of the squeegee to the workpiece; a horizontal drive mechanism moving the holding table relative to the squeegee in a horizontal direction; a position detector detecting a position of the squeegee on the workpiece; a pressure detector detecting pressure of the squeegee to the workpiece; a storing unit storing at least the pressure of the squeegee to the adhesive sheet and a moving speed of the holding table in accordance with a shape of the workpiece; a setting unit setting a joining condition of the adhesive sheet in accordance with the workpiece; a pressure controller operating the pressurizing mechanism to control the pressure during joining of the adhesive sheet to the workpiece in accordance with the positional information detected by the position detector and deviation, the deviation being determined through comparison between actual pressure detected by the pressure detector and reference pressure stored in the storing unit and determined for every position of the workpiece; and a speed controller operating the horizontal drive mechanism to control the moving speed of the holding table in accordance with deviation, the deviation being determined through comparison between an actual moving speed and a reference moving speed stored in the storing unit, the actual moving speed being determined from the positional information detected by the position detector.

With the embodiment of the present invention, the pressure detector detects the actual pressure, and then the pressure controller reads out the reference pressure from the storing unit in accordance with the positional information detected by the position detector at time of detecting the actual pressure. The pressure controller compares the actual pressure with the reference pressure. Simultaneously, the speed controller reads out the reference moving speed from the storing unit in accordance with the positional information, and compares the actual moving speed with the reference moving speed. The pressurizing mechanism and the horizontal drive mechanism each operate to correct the deviation to be the reference pressure and the reference speed set in advance, respectively, based on the comparison results. Consequently, no excessive pressure is applied to the adhesive sheet. This allows suppressed generation of dotted irregularity or orange peels after joining the adhesive sheet.

Moreover, the storing unit of the apparatus stores an acceleration of the holding table from starting joining of the adhesive sheet to reaching a target speed and theoretical pressure of the squeegee in association with the acceleration, and the speed controller operates the pressurizing mechanism to control the pressure of the squeegee to the adhesive sheet in accordance with the theoretical pressure, the theoretical pressure being in association with the actual acceleration determined by the positional information detected by the position detector until reaching the target speed. Such is preferable.

With the embodiment of the present invention, the actual acceleration is determined upon starting joining of the adhesive sheet at which the pressure to the adhesive sheet is likely to be excessive. The pressure of the squeegee to the adhesive sheet is so controlled as to be the theoretical pressure in associated with the acceleration in advance. This achieves joining of the adhesive sheet to the workpiece under stable pressure. As a result, the adhesive sheet obtains suppressed generation of dotted irregularity and orange peels at a portion thereof where the joining is started.

Moreover, the holding table of the apparatus is formed by a transparent material, and the apparatus further includes an imaging device below a joining portion of the adhesive sheet that images a joining condition of the adhesive sheet. Such is preferable.

With the embodiment of the present invention, a contact condition of the squeegee to the adhesive sheet is confirmable from a rear face using an index model made of a transparent workpiece or a transparent material. For instance, an elastic deformed condition of the adhesive on the adhesive sheet by pressure is confirmable. Consequently, an optimal joining condition of the adhesive sheet is determinable before joining the adhesive sheet to an actual workpiece.

### Advantageous Effects of Invention

The protective adhesive-sheet joining apparatus according to the embodiment of the present invention allows accurate joining of the protective adhesive sheet regardless of a workpiece shape.

### Brief Description of Drawings

Figure 1 is a front view of a protective adhesive-sheet joining apparatus according to one embodiment of the present invention.
Figure 2 is a plan view of the protective adhesive-sheet joining apparatus according to the embodiment.
Figure 3 is a side view of the protective adhesive-sheet joining apparatus according to the embodiment.
Figure 4 is a schematic block diagram of the protective adhesive-sheet joining apparatus according to the embodiment.
Figure 5 is a flow chart illustrating a series of operation by the protective adhesive-sheet joining apparatus according to the embodiment.
Figure 6 to 8 each illustrate operation of joining a protective adhesive sheet to an evaluation sample.
Figure 9 is a front view of a protective adhesive-sheet joining apparatus according to a modification of the present invention.

### Reference Signs List

- 1: holding table
- 2: joining unit
- 5: servomotor
- 8: rotary encoder
- 9: speed controller
- 12: pressurizing mechanism
- 13: angle adjustment mechanism
- 22: squeegee
- 27: pressure transduction controlling mechanism
- 30: potentiometer
- 33: rotary encoder
- 34: angle controller

### Description of Embodiments

The following describes one embodiment of the present invention with reference to drawings. Here, a workpiece to which an apparatus of the embodiment joins a protective adhesive sheet is, for example, paintwork such as a body of an automobile and a front face of a glass window.

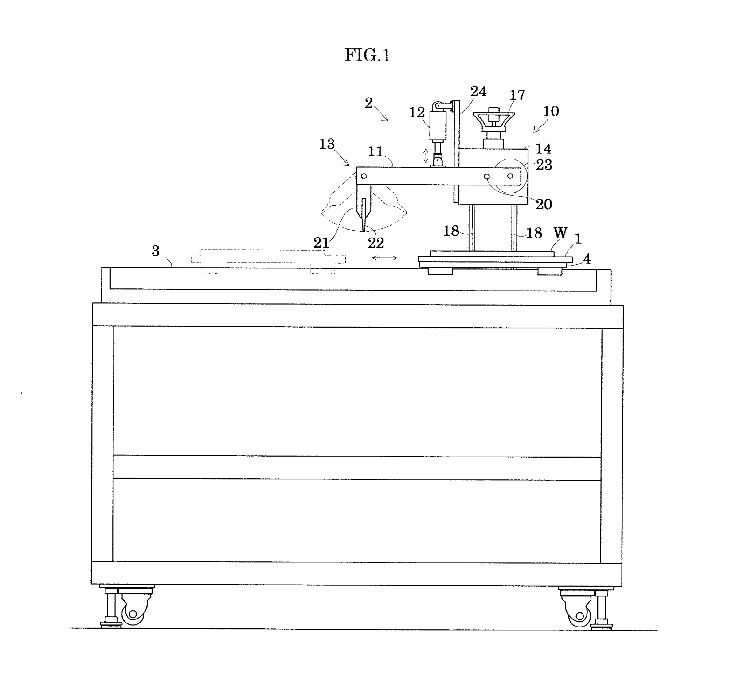

Figure 1 is a front view illustrating an entire protective adhesive-sheet joining apparatus.

The joining apparatus is formed by a holding table 1 and a joining unit 2. The following describes each of the elements in detail.

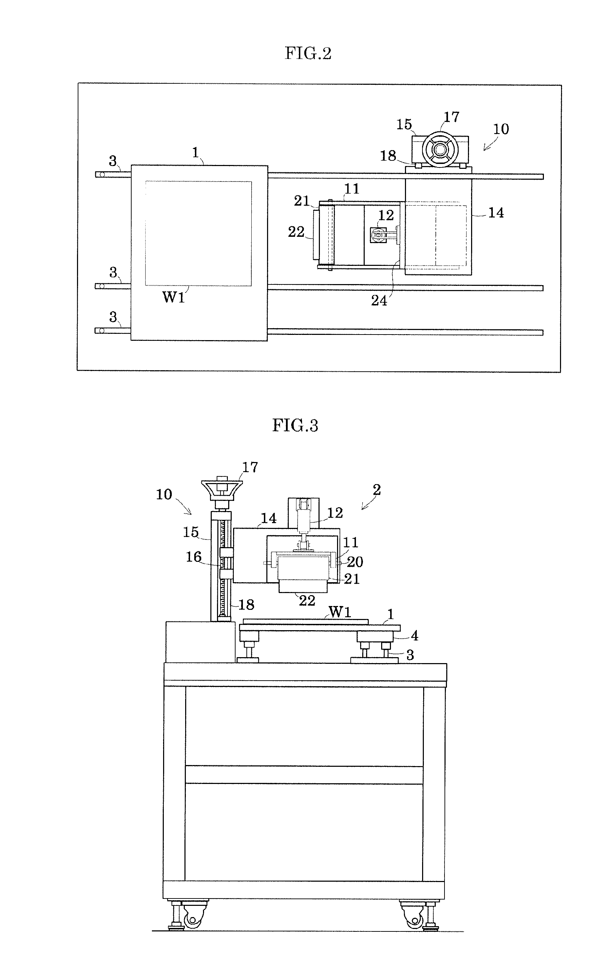

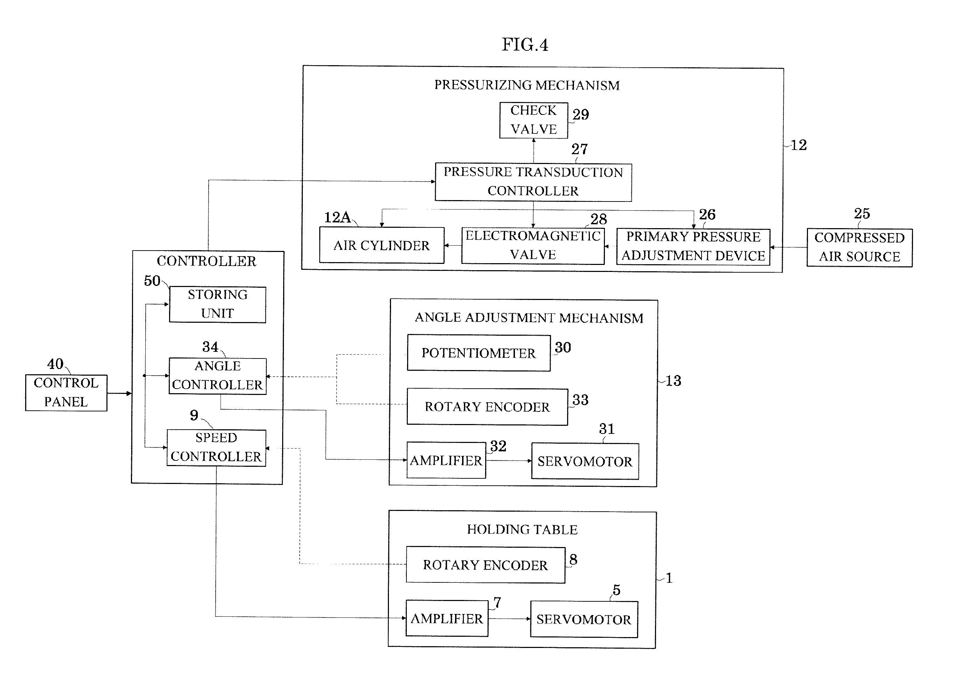

As illustrated in Figures 1 to 3, the holding table 1 vacuum sucks or clamps a rear face of a workpiece W. The holding table 1 is also supported on a movable board 4. The movable board 4 is slidable forward/backward along a guide rail 3 provided horizontally. The movable board 4 reciprocates forward/backward with an actuator having a servomotor 5 illustrated in Figure 4.

A rotation speed of the servomotor 5 is variable by controlling voltage of an amplifier 7 for the servomotor, and accordingly a moving speed of the holding table 1 is adjustable. In addition, a rotary encoder 8 detects positional information of the holding table 1, and transmits the positional information to a speed controller 9 illustrated in Figure 4. Here, the actuator corresponds to the horizontal drive mechanism in the present invention. The rotary encoder 8 corresponds to the position detector in the present invention.

Now return to Figure 1. In the drawing, the joining unit 2 is formed by a lifting mechanism 10, an arm 11, a pressurizing mechanism 12, and an angle adjustment mechanism 13.

The lifting mechanism 10 includes a movable board 14. The movable board 14 operates a handle 17 to move vertically along the guide rail 18. The handle 17 is connected to a ball shaft 16 provided in a vertical frame 15. The vertical frame is erected on the apparatus base.

The movable board 14 has the arm 11 attached on the bottom thereof. The arm 11 has a horizontal axis 20 inserted thereinto horizontally for pivotally supporting the arm 11 swingingly. The arm 11 has a squeegee 22 at the tip thereof. The squeegee 22 is detachably attached via a holder 21. Here, the edge of the squeegee 22 is directed downward.

The arm 11 has a balancer 23 at the rear end thereof. The balancer 23 holds the arm 11 horizontally under its steady state.

For instance, the pressurizing mechanism 12 is a low-friction air cylinder 12. The air cylinder 12 is attached to a vertical board 24 erected on a top face of the movable board 14. The air cylinder 12 is movable integrally with the arm 11. Moreover, the air cylinder 12 has a rod connected to a top face of the arm 11 adjacent to the tip. Accordingly, expansion of the rod of the air cylinder 12 causes the tip of the arm 11 to swing upward/downward around the horizontal axis 20, achieving control of pressure to the workpiece W.

Here, as illustrated in Figure 4, the air cylinder 12 is connected to an external compressed air source 25, a primary pressure adjustment device 26, a pressure transduction controller 27, and an electromagnetic valve 28 in this order from the upstream. The pressure transduction controller 27 is provided with a check valve 29.

The primary pressure adjustment device 26 converts pressure of air supplied from the compressed air source 25 into given stable secondary pressure, and outputs the secondary pressure.

The pressure transduction controller 27 is composed of a regulator, and controls the secondary pressure set in advance to be constant. That is, when detecting a variation in pressure of the air cylinder 12 to obtain a detection signal, the pressure transduction controller 27 determines deviation between actual pressure of the detection signal and preset reference pressure. Then the pressure transduction controller 27 controls an opening of the electromagnetic valve 28 or the check valve 29 in accordance with the deviation, thereby returning the pressure of the air cylinder 12 into the set pressure. Here, the pressure transduction controller 27 functions as both the pressure detector and the pressure controller in the present invention.

The angle adjustment mechanism 13 is formed by a potentiometer 30, a servomotor 31, an amplifier 32 for the servomotor, and a rotary encoder 33.

The potentiometer 30 is attached to the horizontal axis 20 pivotally supporting the arm 11. The potentiometer 30 detects a swing angle of the arm 11. The detection signal is transmitted to an angle controller 34.

The servomotor 31 is connected to the holder 21. The servomotor 31 allows a change in contact angle of the squeegee 22 relative to the workpiece W. Here, a rotation speed of the squeegee 22 with the changed contact angle is adjustable by controlling the voltage of the amplifier 32 for the servomotor.

The rotary encoder 33 detects a rotation angle of the squeegee 22 with the changed contact angle, and transmits the detection signal to the angle controller 34.

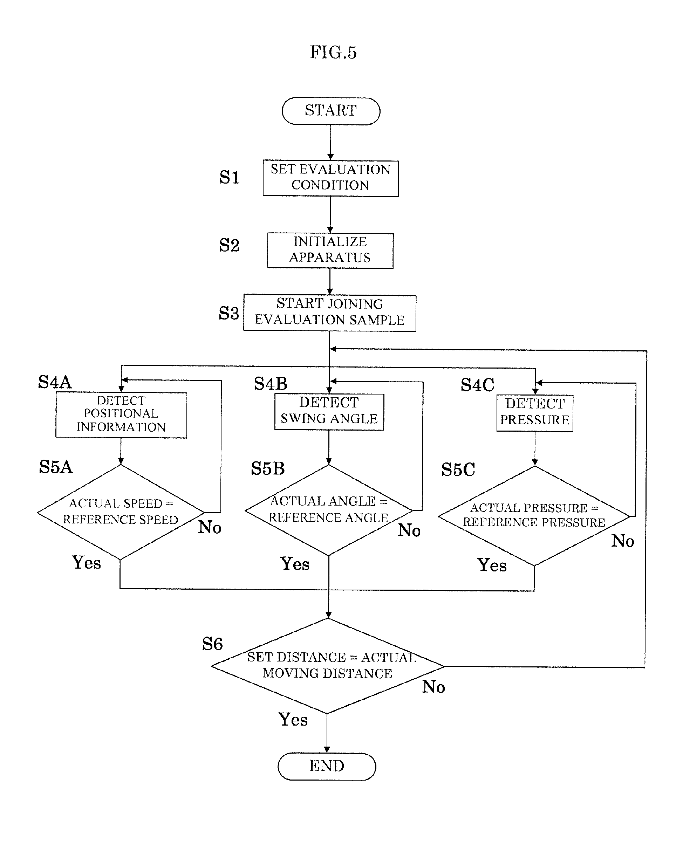

The following describes a series of operation by the apparatus in the above embodiment along with a flow chart in Figure 5.

Before the protective adhesive sheet PT is joined to the workpiece W to be processed, the adhesive sheet PT is repeatedly joined to a plate evaluation sample W1 using the above apparatus, whereby a joining condition is determined in which defect such as no air bubbles or no dotted irregularity occurs. Here, the evaluation sample W1 is made of or coated with the same material as that of the workpiece W. In this manner, a quantified data base is generated.

### Setting Evaluation Condition (Step S1)

Examples of the evaluation condition include pressure (a pressing force) to the sample W1 by the squeegee 22, a contact angle of the squeegee 22, and a moving speed of the holding table 1. A control panel 40 operates to set the evaluation condition from conditions in which the adhesive sheet PT is joined to the workpiece W under a plurality of condition patterns. For instance, in the embodiment, three parameters, i.e., pressure, a contact angle, and a moving speed, are each set to have a constant value from starting to completion of joining of the adhesive sheet PT. Then, the constant value is changed.

The evaluation sample W1 is placed on the holding table 1 where a setting condition of the sample W1 is selected from the control panel 40. The protective adhesive-sheet joining apparatus is initialized (Step S2).

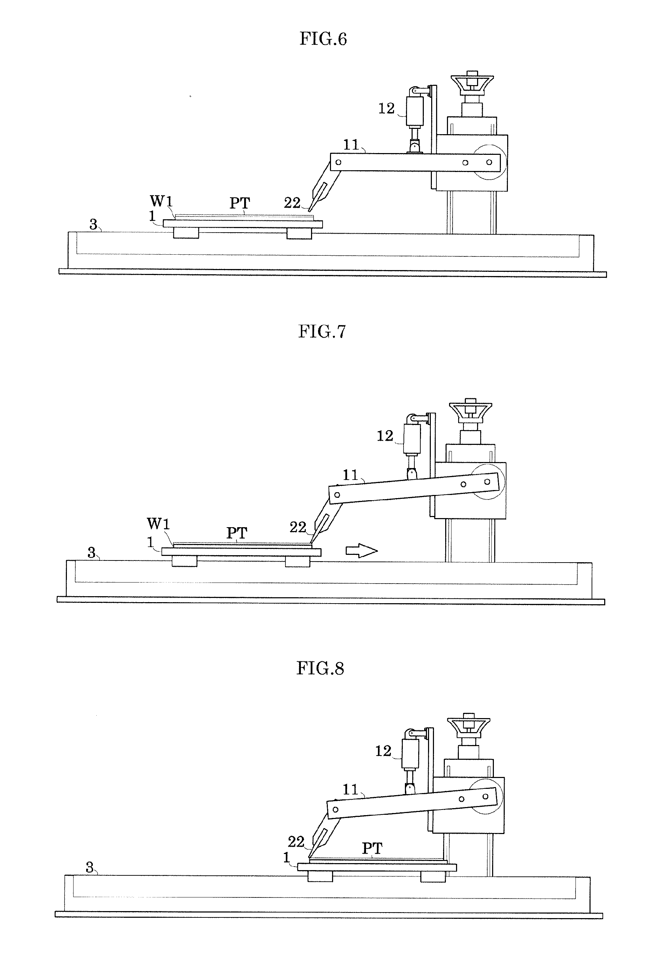

The holding table 1 is moved to a joining start position. That is, as illustrated in Figure 6, an original position is set such that a front end of the evaluation sample W1 in the moving direction conforms to a lowered position of the squeegee 22. At this time, the handle 17 operates to complete control in level of the arm 11.

The pressurizing mechanism 12 and the angle adjustment mechanism 13 perform setting simultaneously. The pressurizing mechanism 12 sets the pressure of the squeegee 22 with the primary pressure adjustment device 26 so as to have the secondary pressure. Here, the secondary pressure is stable at a value approximate to the set value of the pressure of the squeegee 22.

The angle adjustment mechanism 13 performs setting so as for the squeegee 22 to contact the evaluation sample W1 at a given angle. That is, the rotary encoder 33 detects the rotation angle of the servomotor 31 to obtain the detection result. Then, the angle controller 34 controls rotation of the servomotor 31 to have a set angle in accordance with the detection result.

When the initialization completes, joining of the adhesive sheet PT starts (Step S3). As illustrated in Figure 7, the pressurizing mechanism 12 swingingly moves the arm 11 downward to adhere tightly and press the tip of the squeegee 22 to the adhesive sheet PT at a set angle. Thereafter, as illustrated in Figure 8, the holding table 1 is moved to a terminal position at a set speed.

During the joining of the adhesive sheet PT, the rotary encoder 8 detects the positional information of the holding table 1, and a storing unit 50 stores the positional information (Step S4A). The speed controller 9 calculates a distance from the positional information, and determines a moving speed (actual speed) of the holding table 1 by differentiation of the distance. In addition, the speed controller 9 compares the reference moving speed stored in the storing unit with the actual moving speed. When some deviation occurs, the voltage of the amplifier 7 for the servomotor is changed, whereby the moving speed is kept constant using the servomotor 5 (Step S5A).

In addition, a swing angle (actual angle) of the arm 11 is detected (Step S4B). The arm 11 swings in association with movement of the squeegee 22 along the contour of the evaluation sample W1. Then, comparison is made between the actual angle detected by the potentiometer 30 and the reference angle. When some deviation occurs, the servomotor 31 operates in accordance with the deviation to keep the contact angle of the squeegee 22 to the sample constant (Step S5B).

The pressure transduction controller 27 detects a pressure variation (Step S4C). The actual pressure is compared with the set reference pressure for every pressure variation to determine deviation. Then, an opening of the check valve 29 or the electromagnetic valve 28 is controlled in accordance with the determined deviation to keep the pressing force constant (Step S5C).

It is determined from the positional information of the rotary encoder 8 whether or not the holding table 1 reaches the terminal position (step S6). When the holding table 1 reaches the terminal position, the pressurizing mechanism 12 releases its pressurizing. Accordingly, the arm 11 swings upward and returns to its standby position. Simultaneously, the holding table 1 is returned to its original position.

A series of joining of the adhesive sheet PT to the evaluation sample W1 is completed as above. Steps S1 to S6 are repeated for every setting condition.

A plurality of joining conditions of the adhesive sheet PT to the evaluation sample W1 is observed for a given period of time, and an optimal condition is determined in which no imprint of the squeegee or dotted irregularity occurs.

A data base on the optimal condition is made to be stored in the storing unit 50 in the apparatus. The adhesive sheet PT is actually joined to the workpiece W to be processed under on the joining condition selected from the data base at the appropriate times.

A series of operation of the apparatus in the embodiment is completed, and subsequently the same operation is repeated until a given number of workpiece W is processed.

With the apparatus in the embodiment, joining of the adhesive sheet PT to the workpiece W is obtainable while the contact angle and the pressing force of the squeegee 22 as well as the moving speed of the holding table 1 are kept constant corresponding to the contour of the workpiece W in accordance with the optimal joining condition determined from the evaluation sample W1. In other words, automatic joining of the protective adhesive sheet PT to the workpiece W is obtainable under the optimal condition in which no defect in the appearance such as an imprint of the squeegee or dotted irregularity occurs.

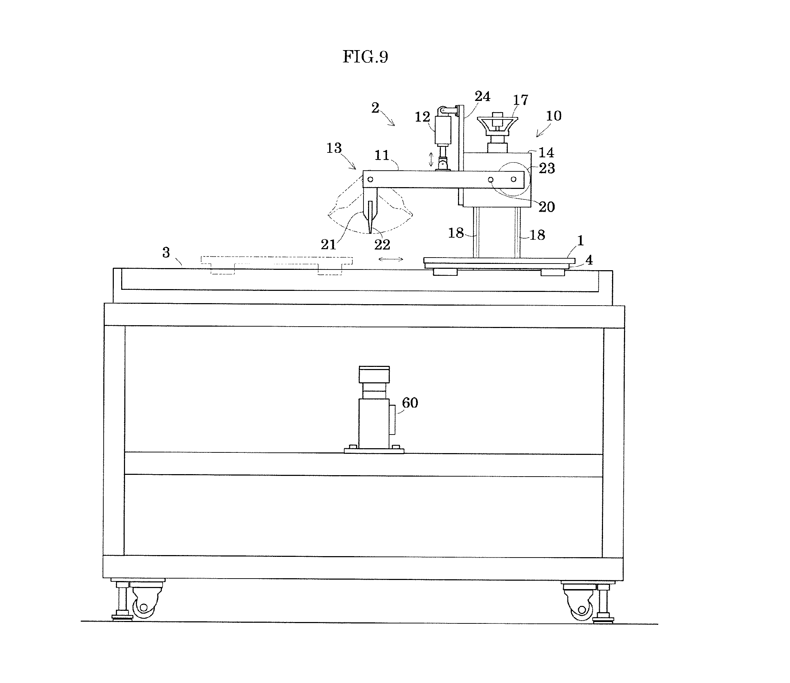

The present invention may be embodied as the following aspects.
(1) In the apparatus in the above embodiment, the holding table 1 may be made of a transparent material of acrylic or the like, and may be provided with an imaging device 60, such as a camera, below the joining position as illustrated in Figure 9. With such a construction, joining the adhesive sheet PT to the evaluation sample made of a transparent material achieves confirmation of elastic deformation of the adhesive layer during the joining step.
(2) In the above embodiment, the angle of the squeegee 22 is adjusted during joining of the adhesive sheet PT to the evaluation sample W1 having the same shape as the workpiece W. Alternatively, the squeegee 22 may be fixed.
(3) The apparatus in the above embodiment may determine the actual acceleration until reaching the set target moving speed, and may adjust the pressure of the squeegee 22 in accordance with the actual acceleration. For instance, the optimal pressure is determined through experiments or simulations in accordance with the acceleration, and stores the optimal pressing force associated with the acceleration is stored as a data base. In this case, no shortage of pressure or no excessive pressure is applied to the adhesive sheet PT when the joining step starts.
(4) In the apparatus in the above embodiment, rightward/leftward swing of the squeegee 22 may be adjustable. Accordingly, the swing angle is variable along the contour of the workpiece W during joining the adhesive sheet PT. This avoids partial contact of the squeegee 22.

### Industrial Applicability

As noted above, the present invention is suitable for accurate joining of a protective adhesive sheet to various types of workpiece, such as a body or a glass of a vehicle.

## Claims

1. A protective adhesive-sheet joining apparatus for joining a protective adhesive sheet to a workpiece, the apparatus comprising:
a holding table supporting the workpiece placed thereon;
a lifting mechanism having a holder for detaching a squeegee and allowing adjustment of a level of the squeegee, the squeegee pressing and joining the adhesive sheet to the workpiece;
an angle adjustment mechanism adjusting an angle of the squeegee;
a pressurizing mechanism controlling pressure of the squeegee to the workpiece;
a horizontal drive mechanism moving the holding table relative to the squeegee in a horizontal direction;
a position detector detecting a position of the squeegee on the workpiece;
a pressure detector detecting pressure of the squeegee to the workpiece;
a storing unit storing at least the pressure of the squeegee to the adhesive sheet and a moving speed of the holding table in accordance with a shape of the workpiece;
a setting unit setting a joining condition of the adhesive sheet in accordance with the workpiece;
a pressure controller operating the pressurizing mechanism to control the pressure during joining of the adhesive sheet to the workpiece in accordance with the positional information detected by the position detector and deviation, the deviation being determined through comparison between actual pressure detected by the pressure detector and reference pressure stored in the storing unit and determined for every position of the workpiece; and
a speed controller operating the horizontal drive mechanism to control the moving speed of the holding table in accordance with deviation, the deviation being determined through comparison between an actual moving speed and a reference moving speed stored in the storing unit, the actual moving speed being determined from the positional information detected by the position detector.

2. The protective adhesive-sheet joining apparatus according to claim 1, wherein
the storing unit stores an acceleration of the holding table from starting joining of the adhesive sheet to reaching a target speed and theoretical pressure of the squeegee in association with the acceleration, and
the speed controller operates the pressurizing mechanism to control the pressure of the squeegee to the adhesive sheet in accordance with the theoretical pressure, the theoretical pressure being in association with the actual acceleration determined by the positional information detected by the position detector until reaching the target speed.

3. The protective adhesive-sheet joining apparatus according to claim 2, wherein
the holding table is formed by a transparent material, and
the apparatus further comprises an imaging device below a joining portion of the adhesive sheet that images a joining condition of the adhesive sheet.
